# EUROPÄISCHE PATENTSCHRIFT

(11) **EP 0 628 737 B1**
(45) Veröffentlichungstag und Bekanntmachung des Hinweises auf die Patenterteilung: **22.01.1997**
(21) Anmeldenummer: 94105732.5
(22) Anmeldetag: 13.04.1994
(51) Int. Cl.: F16B 37/08

(54) **Halteelement**
Fastening element
Dispositif de fixation

(30) Priorität: 13.04.1993 FR 9304321
(43) Veröffentlichungstag der Anmeldung: 14.12.1994
(73) Patentinhaber: TRW CARR FRANCE SNC, F-67340 Ingwiller (FR)
(72) Erfinder: Doré, Pascal, F-67500 Haguenau (FR); Holtzmann, Jean-Paul, F-67330 Niedersoultzbach (FR)
(74) Vertreter: Eder, Thomas, Dr.-Ing.

(56) Entgegenhaltungen:
- FR-A- 2 474 134
- FR-A- 2 623 577
- GB-A- 2 098 699

## Beschreibung

Die Erfindung bezieht sich auf ein Halteelement gemäß dem Oberbegriff des Anspruchs 1.

Als Stand der Technik sind bereits derartige Halteelemente bekannt (DE-C-30 02 031, GB-A-20 98 699), welche so konstruiert sind, daß sie lediglich von einer Seite mit einem Befestigungsteil, bspw. einem Träger an einer Kraftfahrzeugkarosserie, verbunden werden können. Damit ist deren Anwendungsbereich infolge der einseitigen Befestigungsmöglichkeit eingeschränkt.

Demgegenüber liegt der vorliegenden Erfindung die Aufgabe zugrunde, ein Halteelement der eingangs genannten Art zu schaffen, welches eine erweiterten Anwendungsbereich besitzt.

Diese Aufgabe wird erfindungsgemäß mit den Merkmalen des Anspruchs 1 gelöst. Hierdurch ergibt sich der Vorteil, daß das erfindungsgemäße Halteelement entweder von einer Seite oder - um 180° gedreht - von der anderen Seite über seine durchgehende Öffnung auf ein Befestigungsteil aufzubringen ist. Damit erweitert sich erheblich der Anwendungsbereich dieses erfindungsgemäßen Halteelements, wobei vorteilhafterweise nur eine Anzahl von Eingriffsteilen in das Befestigungsteilgreifen, je nachdem, von welcher Seite das erfindungsgemäße Halteelement auf das Befestigungsteil aufgebracht wird.

Bei einem Halteelement, bei welchem die Eingriffsteile als über den Umfang der Öffnung verteilte Federzungen ausgebildet sind, kann vorteilhafterweise jeweils ein Teil der Federzungen im Bereich der beiden Stirnseiten der Öffnung angeordnet sein. Diese Federzungen der beiden Bereiche sind vorteilhafterweise in Längsrichtung gegeneinander versetzt; sie liegen bspw. auf Lücke.

Die drei über den Umfang verteilten Federzungen können nach einem anderen Merkmal der Erfindung jeweils im Bereich einer Stirnseite der Öffnung angeordnet sein. Darüber hinaus besteht die Möglichkeit, daß in der Öffnung zwischen den Federzungen Längsrippen zur Zentrierung des als Bolzen ausgebildeten Befestigungsteils angeordnet sind. Damit wird das erfindungsgemäße Halteelement funktionssicher auf dem Bolzen aufgebracht und durch Längsrippen exakt justiert, wobei die Federzungen die Halterung übernehmen, und zwar gleichgültig, von welcher Seite das Halteelement auf den Bolzen aufgebracht wird.

Nach einem anderen Merkmal der Erfindung können sich die Längsrippen im mittleren Bereich der Öffnung befinden, wobei sich an diese Längsrippen in deren Endbereichen jeweils die Federzungen anschließen und diese jeweils gegen die Längsrippen gerichtet sind.

Zur Erleichterung der Montage kann die Öffnung des Lagerbereichs beidseitig jeweils eine Einschubzone aufweisen, an welche zum Inneren der Öffnung die Federzungen anschließen. Diese Einschubzonen sind vorteilhafterweise konisch ausgebildet, sodaß sich das erfindungsgemäße Halteelement problemlos über die jeweilige Einschubzone auf den Bolzen aufschieben läßt.

Nach einem anderen Merkmal der Erfindung können die Federzungen jeweils einen Befestigungsbereich aufweisen, an welchen die konischen Einschubzonen anschließen. Hierdurch ergibt sich eine weitere Justierung des erfindungsgemäßen Halteelements auf einem als Bolzen ausgebildeteten Befestigungsteil.

Alternativ zur vorgenannten Ausführungsform besteht auch die Möglichkeit, daß zwei Lagerbereiche nebeneinander angeordnet sind, wobei der eine Lagerbereich eine konische Einschubzone auf der einen Seite und der andere Lagerbereich eine konische Einschubzone auf der anderen Seite aufweist. Hierdurch ist auch eine seitliche Verschiebung des Halteelements möglich, je nachdem, von welcher Seite dieses auf das Befestigungsteil aufgesetzt wird.

Das Halteelement kann mehrere Haltebereiche aufweisen, wobei der Lagerbereich oder die Lagerbereiche zwischen diesen Haltebereichen angeordnet sind.

Die Erfindung wird nachfolgend anhand von in der Zeichnung dargestellten Ausführungsbeispielen näher beschrieben.

In der Zeichnung zeigen:
- Fig. 1: eine Seitenansicht des Halteelements
- Fig. 2: eine Draufsicht auf das Halteelement
- Fig. 3: eine Ansicht auf das Halteelement gemäß Pfeil III nach Fig. 2
- Fig. 4: einen Schnitt durch das Halteelement gemäß der Linie IV - IV in Fig. 2
- Fig. 5: eine Seitenansicht eines Halteelements nach einer anderen Ausführungsform mit zwei Lagerbereichen
- Fig. 6: eine Draufsicht auf das Halteelement nach Fig. 5.

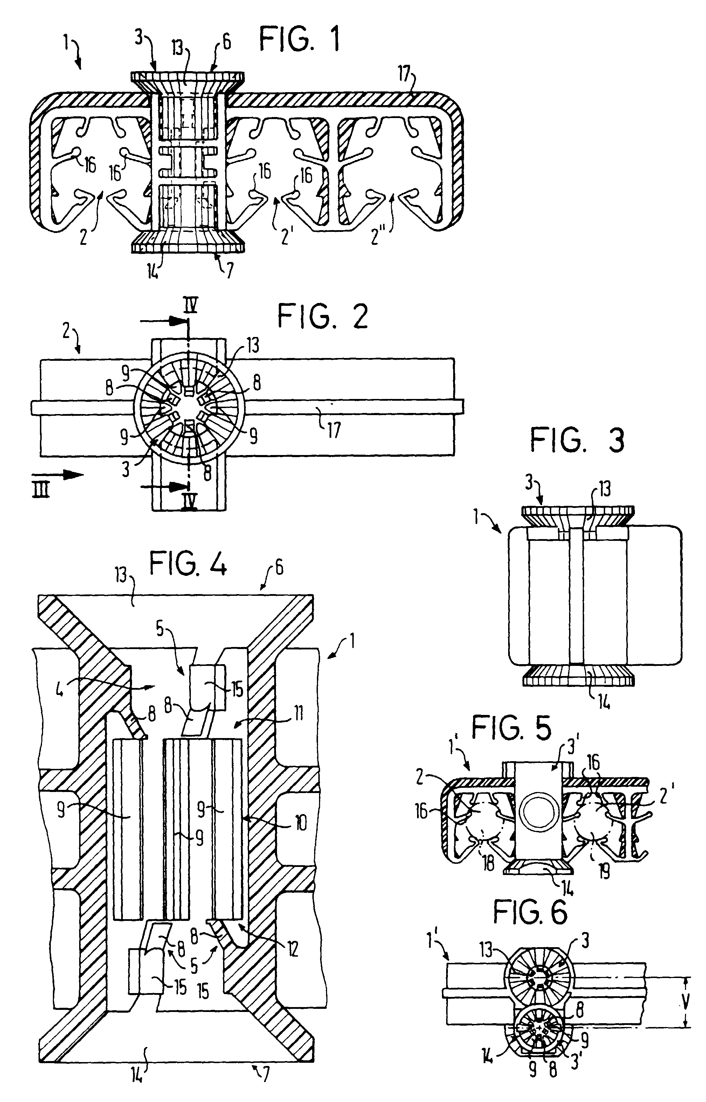

In den Figuren 1 - 3 ist ein Halteelement dargestellt, welches aus Kunststoff besteht und vorzugsweise zur Halterung von Kabeln oder Rohren dient. Dieses Halteelement weist hierzu z.B. drei Haltebereiche 2, 2', 2'' auf, wobei zwischen den Haltebereichen 2 und 2' ein Lagerbereich 3 angeordnet ist.

Die Haltebereiche 2, 2' sowie 2'' dienen, wie vorstehend erwähnt, bspw. zur Aufnahme von Rohren, wozu federnde Arme 16 vorgesehen sind, welche den Außenumfang der in Fig. 5 schematisch dargestellten Rohre 18 bzw. 19 beaufschlagen. Oberseitig sind die Haltebereiche 2, 2', 2'' durch eine Rippe 17 verstärkt.

Rechtwinklig zu der Längsrichtung der Rohre 18 und 19 verläuft der Lagerbereich 3, welcher eine durchgehende Öffnung 4 aufweist. Diese durchgehende Öffnung 4 ist nach Fig. 2 und 4 mit Eingriffsteilen 5 versehen, welche auf den Außenumfang eines nicht näher dargestellten Befestigungsteils, bspw. eines Grobgewindebolzens einwirken und damit das gesamte Halteelement an einem Träger haltern.

Die Eingriffsteile 5 sind nach Fig. 2 und 4 als über den Umfang der Öffnung 4 verteilte Federzungen 8 ausgebildet. Bei dem vorliegenden Ausführungsbeispiel sind im Bereich der einen Stirnseite 6 drei Federzungen und im Bereich der anderen Stirnseite 7 ebenfalls drei Federzungen angeordnet. Die Stirnseiten 6 und 7 des Lagerbereichs 3 sind nach Fig. 1, 3 und 4 jeweils als konische Einschubzonen 13 und 14 ausgebildet. Damit kann das erfindungsgemäße Halteelement 1 abwechselnd und ohne bauliche Veränderung von der einen oder anderen Seite auf einen Grobgewindebolzen montiert werden und als Träger oder als Stütze dienen.

Aus Fig. 4 geht hervor, daß in der Mitte der durchgehenden Öffnung 4 Längsrippen 9 angeordnet sind, welche zur Zentrierung eines bspw. als Grobgewindebolzen ausgebildeten Befestigungsteils dienen. An diese im mittleren Bereich 10 der Öffnung 4 angeordneten Längsrippen 9 schließen in deren Endbereichen 11 und 12 die federnden Zungen 8 an, welche jeweils gegen die Längsrippen 9 gerichtet sind. Hierbei sind die Federzungen 8 der beiden Bereiche in Längsrichtung gegeneinander versetzt, wie insbesondere Fig. 2 zu entnehmen ist.

Durch diese spezielle Gestaltung des Lagerbereichs 3 mit den beiden Gruppen von Federzungen 8 sowie den Längsrippen 9 ergibt sich der Vorteil, daß das erfindungsgemäße Halteelement 1 im mittleren Bereich 10 genau auf den Grobgewindebolzen aufgesetzt ist und zwar unabhängig, ob von der Stirnseite 6 oder 7. Die Federzungen 8 der jeweiligen Gruppe bewirken im Zusammenhang mit den Längsrippen 9 damit eine gute, zentrierte Halterung des erfindungsgemäßen Halteelements auf dem Befestigungsteil, d.h. dem Grobgewindebolzen.

Aus Fig. 4 ist ersichtlich, daß an die Einschubzonen 13 bzw. 14 jeweils zum Inneren der Öffnung 4 hin die Federzungen 8 anschließen. Diese Federzungen 8 weisen jeweils einen an die konischen Einschubzonen 13 und 14 angrenzenden Befestigungsbereich 15 auf. Die Oberseiten dieser Befestigungsbereiche 5 können ebenfalls mit zur Zentrierung des erfindungsgemäßen Halteelements 1 auf einem nicht näher dargestellten Befestigungsbolzen beitragen.

Bei dem Ausführungsbeispiel nach Fig. 1 - 4 ist lediglich ein Lagerbereich 3 vorhanden, welchem mehrere Haltebereiche 2, 2', 2'' zugeordnet sind. Das Ausführungsbeispiel nach Fig. 5 und Fig. 6 zeigt, daß es auch möglich ist, zwei Lagerbereiche 3, sowie 3' nebeneinander anzuordnen, wobei der eine Lagerbereich 3 eine konische Einschubzone 13 auf der einen Seite und der andere Lagerbereich 3' eine konische Einschubzone 14 auf der anderen Seite aufweist.

Damit läßt sich das erfindungsgemäße Halteelement 1' wiederum um 180° gedreht von zwei Seiten auf ein nicht näher dargestelltes Befestigungsteil aufbringen, wobei zusätzlich die Möglichkeit eines seitlichen Versatzes V nach Fig. 6 gegeben ist, je nachdem, welcher der beiden Lagerbereiche 3 bzw. 3' die Halterung des Halteelements 1' bewirkt.
Durch die besondere Gestaltung des Lagerbereichs 3 bzw. der Lagerbereiche 3 und 3' wird auf einfache Weise ein erweiterter Anwendungsbereich eines Halteelements 1 geschaffen. Es ist nicht zwingend erforderlich, daß dieses Halteelement 1 bzw. 1' mit Haltebereichen 2 bzw. 2' bzw. 2" zur Halterung von Rohren ausgestattet sein muß.

## Patentansprüche

1. Halteelement (1), mit mindestens einem Haltebereich (2, 2', 2'') und einem diesem Haltebereich (2, 2', 2') zugeordneten Lagerbereich (3), welcher eine durchgehende Öffnung (4) aufweist, die mit Eingriffsteilen (5) zur Halterung an einem Befestigungsteil versehen ist,
dadurch gekennzeichnet,
daß die Öffnung (4) den Lagerbereich (3) derart durchdringt, daß das Halteelement (1) von beiden Stirnseiten (6, 7) her auf das Befestigungsteil aufbringbar ist und
daß eine Anzahl von Eingriffsteilen (5) jeweils einer Aufbringrichtung der Öffnung (4) des Lagerbereichs (3) auf das Befestigungsteil zugeordnet ist.

2. Halteelement nach Anspruch 1, wobei die Eingriffsteile (5) als über den Umfang der Öffnung (4) verteilte Federzungen (8) ausgebildet sind, dadurch gekennzeichnet, daß jeweils ein Teil der Federzungen (8) im Bereich der beiden Stirnseiten (6,7) der Öffnung (4) angeordnet sind.

3. Halteelement nach Anspruch 2, dadurch gekennzeichnet, daß die Federzungen (8) der beiden Bereiche in Längsrichtung gegeneinander versetzt sind.

4. Halteelement nach Anspruch 2 und 3, dadurch gekennzeichnet, daß drei über den Umfang verteilte Federzungen (8) jeweils im Bereich einer Stirnseite (6, 7) der Öffnung (4) angeordnet sind.

5. Halteelement nach einem der Ansprüche 2 bis 4, dadurch gekennzeichnet, daß in der Öffnung (4) zwischen den Federzungen (8) Längsrippen (9) zur Zentrierung des als Bolzen ausgebildeten Befestigungsteils angeordnet sind.

6. Halteelement nach Anspruch 5, dadurch gekennzeichnet, daß sich die Längsrippen (9) im mittleren Bereich (10) der Öffnung (4) befinden, daß sich an diesen Längsrippen (9) in deren Endbereichen (11, 12) jeweils die Federzungen (8) anschließen und daß die Federzungen (8) jeweils gegen die Längsrippen (9) gerichtet sind.

7. Halteelement nach Anspruch 6, dadurch gekennzeichnet, daß die Öffnung (4) des Lagerbereichs (3) beidseitig jeweils eine Einschubzone (13, 14) aufweist, an welche zum Inneren der Öffnung (4) die Federzungen (8) anschließen.

8. Halteelement nach Anspruch 7, dadurch gekennzeichnet, daß die Einschubzonen (13, 14) jeweils konisch ausgebildet sind.

9. Halteelement nach Anspruch 7 und 8, dadurch gekennzeichnet, daß die Federzungen (8) jeweils einen Befestigungsbereich (15) aufweisen, an welchen die konischen Einschubzonen (13, 14) anschließen.

10. Halteelement nach den Ansprüchen 1 bis 6, dadurch gekennzeichnet, daß zwei Lagerbereiche (3, 3') nebeneinander angeordnet sind, wobei der eine Lagerbereich (3) eine konische Einschubzone (13) auf der einen Seite und der andere Lagerbereich (3') eine konische Einschubzone (14) auf der anderen Seite aufweist.

11. Halteelement nach einem der vorhergehenden Ansprüche, mit mehreren Haltebereichen (2, 2', 2') , dadurch gekennzeichnet, daß der Lagerbereich oder die Lagerbereiche (3, 3') zwischen den Haltebereichen (2, 2', 2') angeordnet sind.

## Claims

1. Retaining element (1) having at least one retaining region (2, 2', 2") and a bearing region (3) which is assigned to said retaining region (2, 2', 2") and has an opening (4) passing through it which is provided with engagement parts (5) for securing on a fastening part, characterized in that the opening (4) passes through the bearing region (3) such that the retaining element (1) can be fitted onto the fastening part from both end sides (6, 7), and in that a number of engagement parts (5) is assigned in each case to one direction in which the opening (4) of the bearing region (3) is fitted onto the fastening part.

2. Retaining element according to Claim 1, the engagement parts (5) being designed as spring tongues (8) which are distributed over the circumference of the opening (4), characterized in that some of the spring tongues (8) are arranged in each case in the region of the two end sides (6, 7) of the opening (4).

3. Retaining element according to Claim 2, characterized in that the spring tongues (8) of the two regions are offset with respect to one another, in the longitudinal direction.

4. Retaining element according to Claims 2 and 3, characterized in that three spring tongues (8) distributed ver the circumference are arranged in each case in the region of an end side (6, 7) of the opening (4).

5. Retaining element according to one of Claims 2 to 4, characterized in that longitudinal ribs (9) are arranged in the opening (4), between the spring tongues (8), in order to centre the fastening part designed as a bolt.

6. Retaining element according to Claim 5, characterized in that the longitudinal ribs (9) are located in the central region (10) of the opening (4), in that the spring tongues (8) in each case adjoin said longitudinal ribs (9) in the end regions (11, 12) of the latter, and in that the spring tongues (8) are in each case directed towards the longitudinal ribs (9).

7. Retaining element according to Claim 6, characterized in that the opening (4) of the bearing region (3) has in each case one push-in zone (13, 14) at the two ends, the spring tongues (8) adjoining said push-in zone towards the interior of the opening (4).

8. Retaining element according to Claim 7, characterized in that the push-in zones (13, 14) are of a conical design in each case.

9. Retaining element according to Claims 7 and 8, characterized in that the spring tongues (8) each have a fastening region (15) which is adjoined by the conical push-in zones (13, 14).

10. Retaining element according to Claims 1 to 6, characterized in that two bearing regions (3, 3') are arranged one beside the other, one bearing region (3) having a conical push-in zone (13) at one end and the other bearing region (3') having a conical push-in zone (14) at the other end.

11. Retaining element according to one of the preceding claims, having a plurality of retaining regions (2, 2', 2"), characterized in that the bearing region or the bearing regions (3, 3') is or are arranged between the retaining regions (2, 2', 2").

## Revendications

1. Dispositif de fixation (1), avec au moins une zone de fixation (2, 2', 2') et une zone de palier (3) affectée à cette zone de fixation (2, 2', 2"), zone de palier qui présente une ouverture traversante (4) qui est munie d'éléments d'engagement (5) destinés au maintien sur une pièce d'attache,
caractérisé en ce que
l'ouverture (4) traverse la zone de palier (3) de telle sorte que le dispositif de fixation (1) peut être appliqué par les deux côtés frontaux (6, 7) sur la pièce d'attache et
en ce qu'une pluralité d'éléments d'engagement (5) est affecté respectivement à une direction d'application de l'ouverture (4) de la zone de palier (3) sur la pièce d'attache.

2. Dispositif de fixation selon la revendication 1, avec les parties d'engagement (5) munies de lames de ressort (8) réparties sur la périphérie de l'ouverture (4), caractérisé en ce que respectivement une partie des lames de ressort (8) est disposée dans la zone des deux côtés frontaux (6,7) de l'ouverture (4).

3. Dispositif de fixation selon la revendication 2, caractérisé en que les lames de ressort (8) des deux zones sont décalées entre elles dans la direction longitudinale.

4. Dispositif de fixation selon la revendication 2 et 3, caractérisé en ce que trois lames de ressort (8) réparties sur la périphérie sont disposées respectivement dans la zone d'un côté frontal (6, 7) de l'ouverture (4).

5. Dispositif de fixation selon l'une des revendications 2 à 4, caractérisé en ce que dans l'ouverture (4) entre les lames de ressort (8) sont disposées des nervures longitudinales (9) destinées au centrage de la pièce d'attache conçue sous forme d'axe ou de boulon.

6. Dispositif de fixation selon la revendication 5, caractérisé en ce que les nervures longitudinales (9) se situent dans la zone médiane (10) de l'ouverture (4), en ce que les lames de ressort (8) se raccordent respectivement sur ces nervures longitudinales (9) dans leurs zones d'extrémité (11, 12) et en ce que les lames de ressort (8) sont respectivement dirigées contre les nervures longitudinales (9).

7. Dispositif de fixation selon la revendication 6, caractérisé en ce que l'ouverture (4) de la zone de palier (3) présente des deux côtés respectivement une zone d'introduction (13, 14) sur laquelle se raccordent les lames de ressort (8) vers l'intérieur de l'ouverture (4).

8. Dispositif de fixation selon la revendication 7, caractérisé en ce que les zones d'introduction (13, 14) sont respectivement de forme conique.

9. Dispositif de fixation selon les revendications 7 et 8, caractérisé en ce que les lames de ressort (8) présentent respectivement une zone d'attache (15) sur laquelle se raccordent les zones d'introduction conique (13, 14).

10. Dispositif de fixation selon les revendications 1 à 6, caractérisé en ce que deux zones de palier (3, 3') sont disposées de façon contiguë entre elles, une zone de palier (3) présentant une zone d'introduction conique (13) sur un côté et l'autre zone de palier (3') présente une zone d'introduction conique (14) de l'autre côté.

11. Dispositif de fixation selon l'une des revendications précédentes, avec plusieurs zones de fixation (2, 2', 2"), caractérisé en ce que la ou les zone(s) de palier (3, 3') est(sont) disposée(s) entre les zones de fixation (2, 2', 2").
